(19) Europäisches Patentamt
European Patent Office
Office européen des brevets

(11) **EP 2 039 492 B1**

(12) **EUROPÄISCHE PATENTSCHRIFT**

(45) Veröffentlichungstag und Bekanntmachung des Hinweises auf die Patenterteilung:
**18.09.2013 Patentblatt 2013/38**

(51) Int Cl.:
**B29C 47/10** (2006.01)   **B29C 47/50** (2006.01)
**B29C 47/92** (2006.01)   B29C 47/82 (2006.01)

(21) Anmeldenummer: 08105402.5

(22) Anmeldetag: **22.09.2008**

(54) **Verfahren zum Extrudieren**

Method of extrusion

Procédé d'extrusion

(84) Benannte Vertragsstaaten:
**DE ES FR IT**

(30) Priorität: **24.09.2007 DE 102007045533**

(43) Veröffentlichungstag der Anmeldung:
**25.03.2009 Patentblatt 2009/13**

(73) Patentinhaber: **VMI - AZ Extrusion GmbH
93486 Runding (DE)**

(72) Erfinder: **Skibba, Olaf, Dr.
30161 Hannover (DE)**

(74) Vertreter: **Splanemann
Patentanwälte Partnerschaft
Rumfordstrasse 7
80469 München (DE)**

(56) Entgegenhaltungen:
WO-A-02/058912     WO-A-2006/126717
DE-A1- 3 013 184     DE-A1-102005 050 619
US-A- 5 378 415     US-A1- 2005 087 906

• DATABASE WPI Week 200418 Thomson Scientific, London, GB; AN 2004-183685 XP002511907 -& JP 2003 266523 A (TOYO RUBBER IND CO LTD) 24. September 2003 (2003-09-24)

**Beschreibung**

Die Erfindung betrifft ein Verfahren, gemäß dem Oberbegriff von Anspruch 1.

Derartige Fördervorrichtungen werden eingesetzt, um eine zu extrudierende Mischung aus einer Mehrzahl von Komponenten zu erzeugen. Es ist bekannt, dass die Mischung von Komponenten, die eine zu extrudierende Masse ergeben sollen, in unterschiedlicher Mischqualität erfolgt, wobei bestimmte Komponenten dazu neigen, sich mit einer guten Gleichmäßigkeit zu vermischen, während andere schlecht mischbar sind.

Um den derartigen Mischproblemen, die auch mit entsprechenden Dosiererfordernissen einhergehen, Rechnung zu tragen, sind zahlreiche unterschiedliche Konstruktionen bekannt geworden. Beispielsweise ist es vorgeschlagen worden, schlecht mischbare Komponenten vorzumischen. Ferner ist es auch vorgeschlagen worden, für jede zu mischende Komponente eine separate Fördervorrichtung, die aus einer Extruderschnecke und einer hieran angeschlossenen volumetrischen Fördervorrichtung besteht, vorzusehen. Diese Lösung hat den Vorteil, dass eine recht genaue Dosierung erzielbar ist, nachdem die Abgabe der Komponente zu der eigentlichen Mischvorrichtung hin dann genau dosiert erfolgen kann.

Eine derartige Lösung bedingt andererseits eine Vielzahl von Extruderschnecken und volumetrischen Förderern, die meist als Zahnradpumpen ausgebildet sind. Derartige Lösungen sind insofern meist vergleichweise teuer und auch wartungsaufwändig, denn jeder Tochterförderer muss separat gewartet werden.

Eine Lösung, bei der eine oder mehrere Komponenten über einen Hauptförderer oder eine oder mehrere Tochterförderer zuführbar sind, ist aus der DE 10 2005 050 619 A1 ersichtlich. Bei dieser Lösung sind insgesamt drei volumetrische Förderer für die Bereitstellung einer Mischung aus zwei Komponenten erforderlich.

Trotz des erforderlichen Aufwandes ist bei einer derartigen Lösung die Mischqualität gerade bei Mischungen, von denen wenigstens zwei Komponenten schlecht miteinander mischbar sind, noch verbesserungsfähig.

Zur Verbesserung der Mischqualität ist es an sich bereits bekannt geworden, sogenannte Transfermixbereiche vorzusehen, oder beispielsweise Stiftextruderbereiche, wozu beispielsweise auf die DE-A1 10 2005 048 846.3 zu verweisen ist. In einem Transfermixbereich wird im Verlaufe der Extruderschnecke der Durchtrittsquerschnitt für das zu extrudierende Gut radial nach außen in den Bereich des Extrudergehäuses hinein verlagert, und anschließend hieran radial nach innen zur Extruderschnecke hin.

Demgegenüber liegt der Erfindung die Aufgabe zugrunde, den Aufwand für die Bereitstellung eines Verfahrens gemäß dem Oberbegriff von Anspruch 1 möglichst gering zu halten, aber dennoch ein besonders gutes Mischergebnis gerade auch bei Komponenten mit schlechtem Mischverhalten zu gewährleisten.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, den Ausgangs-Volumenstrom für die Berechnung der einzelnen Volumenströme von Tochterförderern als Basis zu verwenden. Der Ausgangs-Volumenstrom $V_{ges}$ ergibt sich zu

$$V_{ges} = V_1 + V_2 + \ldots + V_{n-1} + V_n$$

Dementsprechend ergibt sich für einen Volumenstrom $V_n$ der Komponente n:

$$V_n = V_{ges} - (V_1 + V_2 + \ldots + V_{n-1})$$

Erfindungsgemäß besonders günstig ist es, dass durch die unabhängige Einstellung der Drehzahl oder Förderrate des Extruders von der Förderrate des volumetrisch arbeitenden Förderers die Mischqualität gleichbleibend hoch realisierbar ist.

Überraschend lässt sich insofern mit dieser Maßnahme auch den Problemen begegnen, die entstehen, wenn miteinander schlecht mischbare Komponenten gemischt werden müssen; durch eine deutliche Erhöhung der Förderrate des Extruders gegenüber der Förderrate des volumetrisch arbeitenden Förderers wird dann doch eine gute Mischung erzielt. Die Förderraten können beispielsweise so eingestellt sein, dass der Ausgangsdruck des Extruders um ein Mehrfaches höher als der Nenn-Eingangsdruck des volumetrisch arbeitenden Förderers ist. Auch wenn nähere Untersuchungen noch vorgenommen werden müssten, wird vermutet, dass durch die Druckunterschiede sich im Übergangsbereich eine intensive Hochdruck-Nachvermischung einstellt, die durch die gewählte Anordnung gerade bei problematischen Mischungen doch die gewünschte Mischwirkung sicherstellt.

Es versteht sich, dass bei weniger problematischen Mischkomponenten die Förderrate des Extruders auf einen üblichen Wert reduziert werden kann, um insofern nicht überflüssig Energie zu verbrauchen.

Die unabhängige Einstellung bedingt, dass die Förderwirkung der einzelnen Tochterförderer entsprechend eingestellt werden muss. Dies ist vergleichweise aufwändig, gerade, wenn eine Vielzahl von Tochterförderern für eine hohe Zahl n von Komponenten vorgesehen ist. Andererseits ist die Einstellung der Tochterförderer in Anpassung an die Extruder-Förderrate erforderlich, um die Mischungsverhältnisse genau beizubehalten. Überraschend lässt sich das Mischungsverhältnis auch beibehalten, wenn lediglich n-1 volumetrische Tochterförderer eingesetzt sind. Die Komponente n lässt sich dann beispielsweise in Form von Fütterstreifen oder Granulat zuführen, wobei die Zuführvorrichtung in beliebiger geeigneter Weise gestaltet sein kann. Überraschend ergibt sich dennoch bei entsprechender Berechnung der erforderlichten Einzelförderraten das gewünschte Mischungsverhältnis, und zwar auch dann, wenn die Drehzahl des Extruders erhöht wird.

Erfindungsgemäß besonders günstig ist es, dass in jedem Fall endseitig des Extruders ein volumetrisch arbeitender Förderer vorgesehen ist. Die Gesamtförderrate ist damit exakt definiert, wobei durch die genaue Steuerung dieses volumetrischen Förderers auch Förderschwankungen aufgrund der Elastizität des Systems kompensiert werden.

Erfindungsgemäß ist es vorteilhaft, wenn die Komponente n undosiert zugeführt wird. Zwar ist eine dosierte Zuführung nicht ausgeschlossen, aber wenn beispielsweise Fütterstreifen oder Granulat zugegeben werden, kann hierdurch erfindungsgemäß auch die Systemelastiziät ausgeglichen werden, und unzuträglich hohe Drücke eingangsseitig des Extruders, die aufgrund hoher Temperaturen auch zu Materialschädigungen führen können, lassen sich so leichter vermeiden. Typischerweise werden hier Komponenten zugeführt, deren Zufuhr weniger kritisch ist, und die für die späteren Materialeigenschaften in ihrem Mischungsverhältniss von vergleichsweise geringer Bedeutung sind.

In diesem Zusammenhang ist es bevorzugt, wenn die Komponente n eingangsseitig des Extruders zugeführt wird. Damit ist auch sichergestellt, dass auch bereits im Bereich der Zuführstelle des ersten Tochterförderers, die vergleichsweise unkritische Komponente n bereits in der Extruderschnecke vorliegt, so dass sich auch dort eine Mischung einstellt.

Es ist bevorzugt, die Komponente 1, also die über den ersten Tochterförderer zugeführte Komponente, so auszuwählen, dass diese diejenige ist, die am schwierigsten zu mischen ist. Hierdurch ist sichergestellt, dass über den Verlauf des Extruders die Mischung besonders gut ist. Dementsprechend wird die Komponente n-1 deutlich weiter stromab zugeführt, wobei es bevorzugt ist, als Komponente n-1 diejenige Komponente zu verwenden, deren Vermischung am einfachsten ist.

Über die Verwendung von Mehrschneckenextrudern lassen sich auch die Zuführmöglichkeiten deutlich erweitern und eine noch bessere Anpassung an die zu vermischenden Komponenten realisieren.

Die Erfindung ist auch für die Verwendung von thermoplastischen Elastomeren gut geeignet. Für die Vernetzung kann eine vergleichsweise lange Extruderschnecke eingesetzt werden. Die Kautschukkomponente kann in einem Verhältnis von beispielsweise 20 bis 40%, bezogen auf die gesamte Mischung, separat aufbereitet werden, wobei beispielsweise Füllmaterialien über die Tochterförderer zugeführt werden können. Die Aufteilung Elastomer/Thermoplast über zwei getrennte Extruderschnecken bietet auch den Vorteil, dass gegenseitige Materialschädigungen soweit wie möglich vermieden können, so dass auch Peroxide anstatt von Phenolharzen eingesetzt werden können, wodurch die Vernetzung verbessert werden kann.

In weiterer vorteilhafter Ausgestaltung ist stromab des volumetrischen Förderers ein Strainer-Sieb vorgesehen. Dieses Strainer-Sieb ist bevorzugt austauschbar und in einem Bereich vergrößerten Strömungsquerschnitts realisiert, in an sich bekannter Weise natürlich stromauf der Extrusionsdüse. Die Qualität lässt sich hiermit noch weiter verbessern, wobei es sich versteht, dass beliebige andere Filter dort ebenfalls vorgesehen sein können. Der Bereich der Strömungsaufweitung mit dem vergrößerten Förderquerschnitt wirkt zudem als eine Art Puffer und als Materialberuhigungszone.

Eine beliebige Auswahl und Voraufbereitung der zu mischenden Komponenten ist möglich. Beispielsweise kann eine Grundmischung und ein pre-batch und gegebenenfalls weitere Komponenten zusammengeführt werden, wobei interne oder externe Mischvorrichtungen zusätzlich eingesetzt werden können.

Als volumetrische Förderer kommen klassische Zahnradförderer mit zwei miteinander kämmenden Zahnrädern in Betracht, aber auch Planetenpumpen oder auch beliebige andere volumetrische Fördervorrichtungen.

Weitere Vorteile, Einzelheiten und Merkmale ergeben sich aus der nachfolgenden Beschreibung einer Extrusions-Fördervorrichtung in einem erfindungsgemäßen Ausführungsbeispiel anhand der Zeichnung.

Die einzige Figur der Zeichnung zeigt eine schematische Ansicht einer erfindungsgemäßen Extrusions-Fördervorrichtung.

Die in der Figur dargestellte Extrusions-Fördervorrichtung 10 weist einen Extruder 12 auf, der das zentrale Element der Extrusion-Fördervorrichtung bildet. Der Extruder ist für die Extrusion und Förderung von extrudierbaren Mischungen bestimmt, zu denen Kautschukmischungen und beispielsweise TPEs gehören. Er ist dafür bestimmt, einen Volumenstrom abzugeben, der hier als $V_{ges}$ bezeichnet ist. Hierzu ist ausgangsseitig des Exruders 12 ein volumetrischer Förderer 14 vorgesehen, der als Zahnradpumpe ausgebildet ist. Der Antrieb der Zahnradpumpe 14 ist unabhängig vom Antrieb des Extruders 12.

Ausgangsseitig des Extruders 12 ist ferner ein Drucksensor 16 vorgesehen, der den dort vorhandenen Druck misst und die Antriebsgeschwindigkeit des Extruders 12 entsprechend anpasst.

Seitlich des Exruders 12 sind verschiedene Zuführstellen vorgesehen. An einer ersten Zuführstelle 18 ist eine Zuführvorrichtung 20 angebracht, über welche bestimmte Komponenten oder eine bestimmte Komponente der zu extrudierenden Mischung zugeführt wird. Die Komponente n wird dort mit einem Volumenstrom $V_n$ zugeführt, wobei durch die seitliche Zuführung in an sich bekannter Weise bereits eine Vormischung über die Extruderschnecke des Extruders realisiert ist.

Stromab der Zuführstelle 18 sind zahlreiche weitere Zuführstellen 22, 24, 26 vorgesehen, an die Tochterförderer 28, 30, 32 angeschlossen sind, die Komponenten 1, 2 bis n-1 dem Extruder 12 zuführen. Die Zufuhr erfolgt je in einem vorgegebenen VolumenStrom, der je als $V_1$, $V_2$ bis $V_{n-1}$ bezeichnet ist.

Aus dem Verhältnis dieser Tochter-Volumenströme, deren Verhältnis entsprechend dem erwünschten Mischungsverhältnis eingestellt ist, ergibt sich das Zuführvolumen der Zuführvorrichtung 20 $V_n$ zu $V_n = V_{ges} - (V_1 + V_2 + ... + V_{n-1})$.

Je nach den zu vermischenden Komponenten ist die Drehgeschwindigkeit des Extruders 12 höher oder niedriger einstellbar und zwar erfindungsgemäß unabhängig von der Fördergeschwindigkeit der Fördervorrichtung 14. Die minimale Geschwindigkeit entspricht der Fördermenge, die für das Befüllen der volumetrischen Fördervorrichtung 14 stets erforderlich ist. Dieser Fördergeschwindigkeit entspricht ein Druck $p_{ges, min}$. Der Ausgangsdruck, der an dem Drucksensor 16 gemessen wird und der durch die Drehgeschwindigkeit des Extruders 12 einstellbar ist, kann jedoch auch wesentlich höher gewählt werden, beispielsweise auf das 2-, 3- oder gar 4-fache dieses Drucks ansteigen. Hierdurch lässt sich erfindungsgemäß eine besonders günstige Durchmischung erzielen, wenn dies von den zu mischenden Materialien her angezeigt ist.

Es versteht sich, dass beliebige Modifikationen möglich sind, ohne den Bereich der Erfindung zu verlassen. So können über weitere Drucksensoren Arbeitsdrücke gemessen und gegebenenfalls angepasst werden. Ferner können in dem Bereich zwischen der Zuführstelle 26 und dem Drucksensor 16 beliebige Sondermischelemente eingesetzt werden, so beispielsweise ein Transfermixbereich oder ein Stiftextruderbereich. Auch kann die Temperierung des Extruders 12 in weiten Bereichen an die Erfordernisse angepasst werden. Beispielsweise kann es sinnvoll sein, bei einer sehr hohen Enddruckauslegung des Extruders 12 von beispielsweise 250 bar ausgangsseitig eine besonders intensive Kühlung im Gegenstromprinzip zu realisieren.

Für die Bestimmung des Volumenstroms $V_{ges}$ wird zweckmäßigerweise eine Gewichtsmessung stromab des Förderers 14 vorgenommen, beispielsweise mit einer Metergewichtswaage.

**Patentansprüche**

**1.** Verfahren zum Extrudieren mit einer Extrusions-Fördervorrichtung, bestehend aus einem Extruder, der als Mischvorrichtung arbeitet, und dem n Komponenten, die zu mischen sind und mit den natürlichen Zahlen von 1 bis n durchnummeriert sind, insbesondere Komponenten einer Kautschukmischung oder eines Thermoplastischen Elastomers (TPE), seitlich zuführbar sind, wobei ausgangsseitig des Extruders ein volumetrisch arbeitender Förderer, insbesondere eine Zahnradpumpe, angeschlossen ist, und wobei die zugeführten Komponenten volumetrische Tochterförderer durchtreten, die insbesondere ebenfalls als Zahnradpumpen ausgebildet sind,
wobei die Extrusions-Fördervorrichtung zur Bereitstellung der n Komponenten der Mischung n-1 volumetrische Tochterförderer aufweist, die insbesondere als Zahnradpumpen ausgebildet sind, deren Drehzahl oder Förderrate unabhängig von der Förderrate des volumetrisch arbeitenden Förderers (14) einstellbar ist,
**dadurch gekennzeichnet, dass** insbesondere die Komponente n undosiert zuführbar ist,
wobei die Drehzahl des Extruders (12) unabhängig von der Förderrate und dem Volumenstrom des volumetrisch arbeitenden Förderers (14) einstellbar ist, und
der volumetrisch arbeitende Förderer (14) als Planetenpumpe ausgebildet ist und einen Nenn-Eingahgsdruck zwischen 60 und 100 bar und insbesondere etwa 80 bar aufweist.

**2.** Verfahren nach Anspruch 1, **dadurch gekennzeichnet, dass** eine Zuführvorrichtung (20) für die Komponente n als Trichter ausgebildet Ist und die Komponente n in Form von Fütterstreifen oder Granulat vorliegt,

**3.** Verfahren nach einem der vorhergehenden Ansprüche, **dadurch gekennzeichnet, dass** die Zuführvorrichtung (20) für die Komponente n stromauf der Zuführstellen (18) der Komponenten 1 bis n-1 angeordnet ist.

**4.** Verfahren nach einem den vorhergehenden Ansprüche, **dadurch gekennzeichnet, dass** mindestens ein Drucksensor (16) ausgangsseitig des Extruders (12) vorgesehen ist, der an eine Steuervorrichtung angeschlossen ist, die die Drehzahl des Extruders (12) regelt.

**5.** Verfahren nach einem der vorhergehenden Ansprüche, **dadurch gekennzeichnet, dass** mit mindestens einem Drucksensor (16) die Förderrate des Extruders (12) so regelbar ist, dass sie stets grösser als der für das vollständige Befüllen des volumetrisch arbeitenden Förderers (14) erforderliche Druck pges,min ist.

6. Verfahren nach einem der vorhergehenden Ansprüche, **dadurch gekennzeichnet, dass** die Förderrate des Extruders (12) so einstellbar ist, dass sein Ausgangsdruck um mindestens 10% grösser als ein Druck pges,min, der dem für das vollständige Befüllen des volumetrische Förderers (14) erforderlichen minimalen Druck entspricht, ist insbesondere mehr als 20 bis 30% grösser als dieser.

7. Verfahren nach einem der vorhergehenden Ansprüche, dadurch gekennzeichet, dass durch den Extruder (12) die Mischung dem volumetrischen Förderer (14) mit einem Ausgangsdruck zuführbar ist, der ein Mehrfaches über dem Nenn-Eingangsdruck des volumetrisch arbeitenden Förderers (14) liegt, insbesondere um das 2fache bis 6fache.

8. Verfahren nach einem der vorhergehenden Ansprüche, **dadurch gekennzeichnet, dass** der Ausgangsdruck des Extruders (12) auf mehr als 100 bar erhöhbar ist, insbesondere auf 150 - 250 bar und deutlich grösser als der Nenn-Eingangsdruck des volumetrisch arbeitenden Förderers (14) ist.

9. Verfahren nach einem der vorhergehenden Ansprüche, **dadurch gekennzeichnet, dass** der volumetrisch arbeitende Förderer (14) einen Nenn-Eingangsdruck von 20 bis 60 bar und insbesondere 40 bar aufweist.

10. Verfahren nach einem der vorhergehenden Ansprüche, **dadurch gekennzeichnet, dass** der Extruder (12) ein Schneckenextruder ist.

11. Verfahren nach einem der Ansprüche 1 bis 9, **dadurch gekennzeichnet, dass** der Extruder (12) ein Mehrschneckenextruder ist und mehrere Tochterförderer über die Schnecken insbesondere gleichmäßig verteilt sind.

12. Verfahren nach einem der vorhergehenden Ansprüche, **dadurch gekennzeichnet, dass** der Extruder (12) mindestens einen Drosselbereich aufweist, der ein Strömungshinderniss bildet, wobei mindestens ein Drosselbereich stromab der Zuführstelle (18) des letzten Tochterförderers angeordnet ist.

13. Verfahren nach einem der vorhergehenden Ansprüche, **dadurch gekennzeichnet, dass** der Extruder (12) mindestens einen Mischbereich aufweist, der stromab der Zuführstelle (18) des letzten Tochterförderers ausgebildet ist und als Transfermixbereich und/oder als Stiftextruderbereich ausgebildet ist.

14. Verfahren nach einem der vorhergehenden Ansprüche, **dadurch gekennzeichnet, dass** der volumetrisch arbeitende Förderer (14) als Zahnradpumpe, insbesondere als Planetenpumpe , ausgebildet ist.

15. Verfahren nach einem der vorhergehenden Ansprüche, **dadurch gekennzeichnet, dass** mindestens ein Tochterförderer eine Zahnradpumpe, insbesondere eine Planetenpumpe aufweist.

16. Verfahren nach einem der vorhergehenden Ansprüche, **dadurch gekennzeichnet, dass** stromauf mindestens eines Tochterförderers ein Tochterextruder angeordnet ist.

17. Verfahren nach einem der vorhergehenden Ansprüche, **dadurch gekennzeichnet, dass** dem volumetrischen Förderer (14) ein Strainer-Sieb nachgeschaltet ist, das insbesondere austauschbar ist, und das in einem Bereich vergrößerten Strömungsquerschnitts zwischen dem volumetrischen Förderer (14) und einer Extrusionsdüse angeordnet ist.

18. Verfahren nach einem der vorhergehenden Ansprüche, **dadurch gekennzeichnet, dass** die n Komponenten aus einer Grundmischung und einem pre-batch bestehen und dass der pre-batch in einem separaten Mischer, insbesondere einem Innenmischer, vorgemischt ist.

19. Verfahren nach einem der vorhergehenden Ansprüche, **dadurch gekennzeichnet, dass** die Komponenten einer thermoplatischen Elastomer-Mischung durch einen Doppelschneckenextruder zuführbar sind.

**Claims**

1. A method for extrusion using an extrusion conveying apparatus, comprising an extruder that operates as a mixing device, and which can be supplied laterally with n components which are to be mixed and are numbered consecutively starting from the natural number 1 until n, in particular components of a rubber mixture or thermoplastic elastomer (TPE), on the output side of the extruder a volumetrically operating conveyor, in particular a gear pump, being connected, and the components supplied passing through volumetric subsidiary conveyors, which in particular are also formed as gear pumps,

the extrusion conveying apparatus comprising volumetric subsidiary conveyors for the provision of the n components of the mixture n-1, said subsidiary conveyors being formed in particular as gear pumps whose rotational speed or feed rate is adjustable independently of the feed rate of the volumetrically operating conveyor (14),

**characterized in that** in particular the n component is suppliable in an unmetered manner,

the rotational speed of the extruder (12) being adjustable independently of the feed rate and the volumetric flow rate of the volumentrically operating conveyor (14), and

the volumetrically operating conveyor (14) being configured as a planetary pump and comprising a nominal inlet pressure of between 60 and 100 bar, and in particular of about 80 bar.

2. The method according to claim 1, **characterized in that** a feed device (20) for the n component is configured as a funnel and the n component is present in the form of feed strips or granules.

3. The method according to any one of the preceding claims, **characterized in that** the feed device (20) for the n component is arranged upstream of the feed points (18) of the components 1 to n-1.

4. The method according to any one of the preceding claims, **characterized in that** at least one pressure sensor (16) is provided on the output side of the extruder (12) which is connected to a control device regulating the rotational speed of the extruder (12).

5. The method according to any one of the preceding claims, **characterized in that** at least one pressure sensor (16) can control the feed rate of the extruder (12) such that it is always greater than the pressure $p_{ges,min}$ required for the complete filing of the volumetrically operating conveyor (14).

6. The method according to any one of the preceding claims, **characterized in that** the feed rate of the extruder (12) is selected such that its output pressure is greater by at least 10% than a pressure $p_{ges,min}$ corresponding to the minimum pressure required for the complete filling of the volumetric conveyor (14), in particular more than 20 to 30% greater than said pressure

7. The method according to any one of the preceding claims, characterized gekennzeichet In that the extruder (12) can supply the mixture to the volumetric conveyor (14) at an output pressure which is several times higher than the nominal inlet pressure of the volumetrically operating conveyor (14), In particular 2 to 6 times higher.

8. The method according to any one of the preceding claims, **characterized in that** the output pressure of the extruder (12) can be increased to more than 100 bar, In particular to 150 - 250 bar, and is significantly higher than the nominal inlet pressure of the volumetrically operating conveyor (14)

9. The method according to any one of the preceding claims, **characterized in that** the volumetrically operating conveyor (14) has a nominal inlet pressure of 20 to 60 bar and particularly 40 bar.

10. The method according to any one of the preceding claims, **characterized In that** the extruder (12) is a screw extruder.

11. The method according to any one of claims 1 to 9, **characterized In that** the extruder (12) is a multi-screw extruder and several subsidiary conveyors are particularly uniformly distributed over the screw

12. The method according to any one of the preceding claims, **characterized in that** the extruder (12) has at least one throttle region, which forms a flow obstacle, at least one throttle region being arranged downstream of the feed point (18) of the last subsidiary conveyor.

13. The method according to any one of the preceding claims, **characterized in that** the extruder (12) has at least one mixing region configured downstream of the feed point (18) of the last subsidiary conveyor and configured as a transfer mixing region and/or a pin extruder region.

14. The method according to any one of the preceding claims, **characterized in that** the volumetrically operating conveyor (14) is configured as a gear pump, in particular as a planetary pump.

**15.** The method according to any one of the preceding claims, **characterized In that** at least one subsidiary conveyor has a gear pump, in particular a planetary pump.

**16.** The method according to any one of the preceding claims, **characterized in that** a subsidiary extruder is arranged upstream of at least one subsidiary conveyor.

**17.** The method according to any one of the preceding claims, **characterized in that** a strainer is arranged downstream of the volumetric conveyor (14), which Is, in particular, exchangeable and which is disposed in a region of an enlarged flow cross-section between the volumetric conveyor (14) and an extrusion die.

**18.** The method according to any one of the preceding claims, **characterized in that** the n components consist of a basic mixture and a pre-batch and that the pre-batch is premixed in a separate mixer, in particular an internal mixer.

**19.** The method according to any one of the preceding claims, **characterized in that** the components of a thermoplastic elastomer mixture are suppliable via a twin-screw extruder.

**Revendications**

**1.** Procédé permettant l'extrusion avec un dispositif d'extrusion et de transport, formé par une extrudeuse, qui fonctionne en tant que dispositif de mélange et vers laquelle peuvent être acheminés latéralement n composants, qui sont destinés à être mélangés et sont numérotés avec les entiers naturels 1 à n, en particulier des composants d'un mélange de caoutchouc ou d'un élastomère thermoplastique (TPE), le côté sortie de ladite extrudeuse étant relié à un convoyeur à fonctionnement volumétrique, en particulier une pompe à engrenages, et les composants acheminés traversant des convoyeurs secondaires volumétriques, qui en particulier sont réalisés également sous forme de pompes à engrenages,
ledit dispositif d'extrusion et de transport comportant n-1 convoyeurs secondaires volumétriques pour la mise à disposition des n composants du mélange, lesquels sont réalisés en particulier sous forme de pompes à engrenages dont la vitesse de rotation ou la vitesse de transport peut être réglée indépendamment de la vitesse de transport du convoyeur (14) à fonctionnement volumétrique,
**caractérisé en ce qu'**en particulier le composant n peut être acheminé sans être dosé,
la vitesse de rotation de l'extrudeuse (12) pouvant être réglée indépendamment de la vitesse de transport et du flux volumétrique du convoyeur (14) à fonctionnement volumétrique, et
ledit convoyeur (14) à fonctionnement volumétrique est réalisé sous la forme d'une pompe planétaire et possède une pression d'entrée nominale entre 60 et 100 bars et en particulier de 80 bars environ.

**2.** Procédé selon la revendication 1, **caractérisé en ce qu'**un dispositif d'acheminement (20) pour les composants n est réalisé sous forme d'entonnoir et les composants n sont disponible sous forme de bandes ou de granulés

**3.** Procédé selon l'une quelconque des revendications précédentes, **caractérisé en ce que** le dispositif d'acheminement (20) pour les composants n est disposé en amont des lieux d'amenée (18) des composants 1 à n-1.

**4.** Procédé selon l'une quelconque des revendications précédentes, **caractérisé en ce que** sur le côté sortie de l'extrudeuse (12) il est prévu au moins un capteur de pression (16), qui est relié à un dispositif de commande qui règle la vitesse de rotation de l'extrudeuse (12)

**5.** Procédé selon l'une quelconque des revendications précédentes, **caractérisé en ce que** la vitesse d'extrusion de l'extrudeuse (12) peut être réglée avec au moins un capteur de pression (16), de telle sorte qu'elle est en permanence supérieure à la pression pges,min requise pour le remplissage complet du convoyeur (14) volumétrique.

**6.** Procédé selon l'une quelconque des revendications précédentes, **caractérisé en ce que** la vitesse d'extrusion de l'extrudeuse (12) peut être réglée de telle sorte que la pression de sortie de celle-ci est au moins 10 % supérieure à une pression pges, min, qui correspond à la pression minimale requise pour le remplissage complet du convoyeur (14) volumétrique, en particulier plus de 20 à 30 % supérieure à celle-ci

**7.** Procédé selon l'une quelconque des revendications précédentes, **caractérisé en ce que** par l'intermédiaire de l'extrudeuse (12), le mélange peut être acheminé vers le convoyeur (14) volumétrique avec une pression de sortie qui se situe à un multiple, en particulier environ 2 fois à 6 fois, au-dessus de la pression d'entrée nominale du convoyeur (14) volumétrique.

8. Procédé selon l'une quelconque des revendications précédentes, **caractérisé en ce que** la pression de sortie de l'extrudeuse (12) peut être augmentée à plus de 100 bars, en particulier à 150 - 250 bars et est nettement supérieure à la pression d'entrée nominal du convoyeur (14) volumétrique

9. Procédé selon l'une quelconque des revendications précédentes, **caractérisé en ce que** le convoyeur (14) volumétrique possède une pression d'entrée nominale de 20 à 60 bars et en particulier de 40 bars.

10. Procédé selon l'une quelconque des revendications précédentes, **caractérisé en ce que** l'extrudeuse (12) est une extrudeuse à vis.

11. Procédé selon l'une quelconque des revendications 1 à 9, **caractérisé en ce que** l'extrudeuse (12) est une extrudeuse à plusieurs vis et plusieurs convoyeurs secondaires sont répartis, en particulier uniformément, au-dessus des vis sans fin.

12. Procédé selon l'une quelconque des revendications précédentes, **caractérisé en ce que** l'extrudeuse (12) comporte au moins une zone d'étranglement, qui forme un obstacle à l'écoulement, au moins une zone d'étranglement étant disposée en aval du lieu d'amenée (18) du dernier convoyeur secondaire.

13. Procédé selon l'une quelconque des revendications précédentes, **caractérisé en ce que** l'extrudeuse (12) comporte au moins une zone de mélange, qui est réalisée en aval du lieu d'amenée (18) du dernier convoyeur secondaire et est réalisée sous la forme d'une zone de mélange et transfert et/ou sous la forme d'une zone d'extrudeuse à picots.

14. Procédé selon l'une quelconque des revendications précédentes, **caractérisé en ce que** le convoyeur (14) volumétrique est réalisé sous la forme d'une pompe à engrenages, en particulier sous la forme d'une pompe planétaire.

15. Procédé selon l'une quelconque des revendications précédentes, **caractérisé en ce qu'**au moins un convoyeur secondaire comporte une pompe à engrenages, en particulier une pompe planétaire.

16. Procédé selon l'une quelconque des revendications précédentes, **caractérisé en ce qu'**en amont d'au moins un convoyeur secondaire est agencée une extrudeuse secondaire.

17. Procédé selon l'une quelconque des revendications précédentes, **caractérisé en ce qu'**en aval du convoyeur (14) volumétrique est monté un tamis de filtrage, en particulier amovible, qui est monté dans une zone avec une section d'écoulement agrandie entre le convoyeur (14) volumétrique et une filière d'extrusion.

18. Procédé selon l'une quelconque des revendications précédentes, **caractérisé en ce que** les n composants sont constitués d'un mélange de base et d'un lot préliminaire et **en ce que** ledit lot préliminaire est soumis à un mélange préliminaire dans un mélangeur séparé, en particulier un mélangeur intérieur.

19. Procédé selon l'une quelconque des revendications précédentes, **caractérisé en ce que** les composants d'un mélange d'élastomère thermoplastique peuvent être acheminés au moyen d une extrudeuse à double vis.

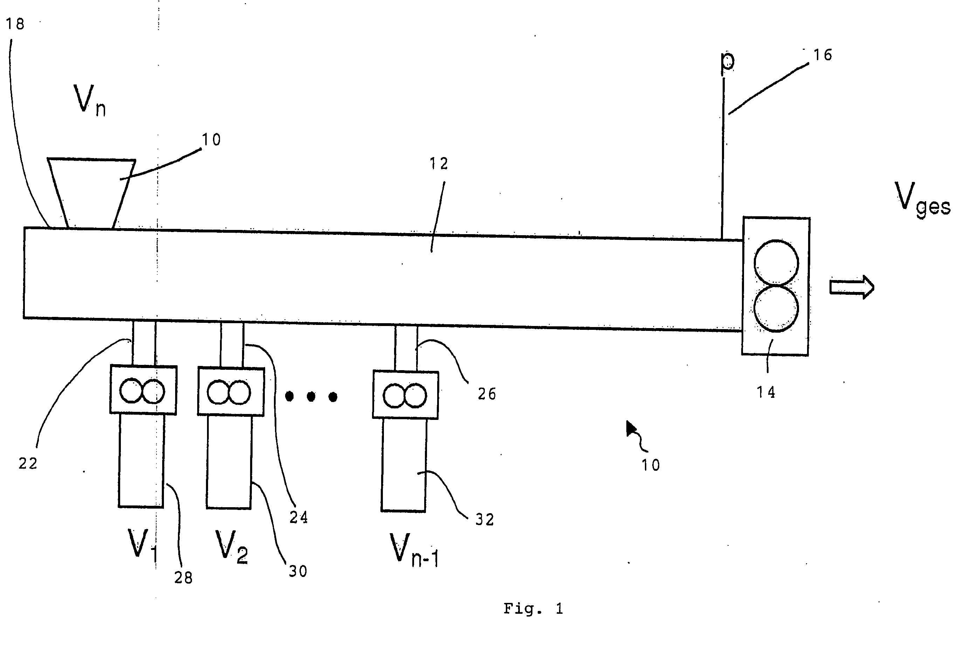

Fig. 1

EP 2 039 492 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005050619 A1
- DE 1102005048846 A